# EUROPEAN PATENT APPLICATION

(11) **EP 4 796 385 A1**
(43) Date of publication of application: **26.08.2026**
(21) Application number: 24879675.7
(22) Date of filing: 11.10.2024
(51) Int. Cl.: B60Q 1/14, G03B 7/00, G03B 15/00, G03B 15/05, H04N 23/56, H04N 23/60, H04N 23/74

(54) **LIGHT DISTRIBUTION CONTROL SYSTEM AND LIGHT DISTRIBUTION CONTROL METHOD**

(30) Priority: 20.10.2023 JP 2023181189
(71) Applicant: Koito Manufacturing Co., Ltd., Tokyo 141-0001 (JP)
(72) Inventor: WATANO Yuichi, Shizuoka-shi, Shizuoka 424-8764 (JP); HANAI Shoichiro, Kariya-city, Aichi 448-8661 (JP)
(74) Representative: Cabinet Beau de Loménie
(86) International application number: PCT/JP2024/036511
(87) International publication number: WO 2025/084250

(57) **Abstract**

An imaging device (11) acquires an image in which an area located at least ahead of the mobility is captured. A lighting device (12) performs light distribution to a lighted area located at least ahead of the mobility. An image processing device (13) specifies, in the image, a target area in which a prescribed target is captured, and outputs luminance information (LM) corresponding to luminance of the target area and caution level information (CA) corresponding to a caution level of the target. A light distribution processing device (14) causes the lighting device (12) to change the light distribution based on the luminance information (LM) and the caution level information (CA). The light distribution processing device (14) causes the lighting device (12) to gradually vary illuminance of at least an area corresponding to the target area in the lighted area in accordance with the luminance, in a case where the caution level is less than a threshold value.

## Description

### Field

The presently disclosed subject matter relates to a light distribution control system adapted to be installed in a mobility. The presently disclosed subject matter also relates to a light distribution control method adapted to be executed by at least one computing device in a mobility.

### Background

Patent Document 1 discloses a light distribution control system installed in a vehicle as an exemplary mobility. The system includes an imaging device and a lighting device. Light distribution performed by the lighting device is controlled based on an image acquired by the imaging device so as to capture at least a traveling path of the vehicle. The light distribution control is so performed as to assist in recognizing situation of the traveling path.

### Citation List

### Patent Document

Patent Document 1: International Publication No. 2020/100638 A1

### Summary of the Invention

### Technical Problem

It is required to perform light distribution capable of assisting with recognition of peripheral environment with an imaging device installed in a mobility while suppressing distraction of a driver of the mobility that is caused by the light distribution.

### Solution to Problem

A first illustrative aspect of the presently disclosed subject matter may provide a light distribution control system adapted to be installed in a mobility, comprising:
an imaging device configured to acquire an image in which an area located at least ahead of the mobility is captured;
a lighting device configured to perform light distribution to a lighted area located at least ahead of the mobility;
an image processing device configured to specify, in the image, a target area in which a prescribed target is captured, and to output luminance information corresponding to luminance of the target area and caution level information corresponding to a caution level of the target; and
a light distribution processing device configured to cause the lighting device to change the light distribution based on the luminance information and the caution level information,
wherein the light distribution processing device is configured to cause the lighting device to gradually vary illuminance of at least an area corresponding to the target area in the lighted area in accordance with the luminance, in a case where the caution level is less than a threshold value.

A second illustrative aspect of the presently disclosed subject matter may provide a light distribution control method adapted to be executed in a mobility, comprising:
causing an imaging device to acquire an image in which an area located at least ahead of the mobility is captured;
specifying, in the image, a target area in which a prescribed target is captured;
acquiring luminance of the target area and a caution level of the target; and
controlling light distribution to a lighted area located at least ahead of the mobility that is performed by a lighting device so as to gradually vary illuminance of at least an area corresponding to the target area in the lighted area in accordance with the luminance, in a case where the caution level is less than a threshold value.

The fact that the caution level of the target specified ahead of the mobility is less than the threshold value means that urgency in causing the mobility to perform a response operation in view of the presence of the target is relatively low. The fact that the luminance of the target area including the target is no less than the threshold value means that an area where the target situates is lighted with excessive illuminance. By gradually decreasing the illuminance of the area in such a situation, not only it is possible to suppress occurrence of a situation that the target cannot be maintained in the specified state with a rapid decrease in illuminance, but also it is possible to suppress distraction of the driver of the mobility that may be caused by the change in the light distribution. In addition, not only power consumption in the lighting device can be reduced, but also it is possible to suppress glare that may be caused to the target.

On the other hand, the fact that the luminance of the target area including the target is less than the threshold value means that an area where the target situates is lighted with insufficient illuminance. By gradually increasing the illuminance of the area in such a situation, not only it is possible to assist with recognition of peripheral environment of the mobility through adjustment of illuminance appropriate for target recognition to be performed by the image processing device, but also it is possible to suppress distraction of the driver of the mobility that may be caused by the change in the light distribution.

As a result, it is possible to realize change in the light distribution so as to assist with recognition of the peripheral environment performed by the imaging device installed in the mobility while suppressing the distraction of the driver of the mobility caused by the change.

A third illustrative aspect of the presently disclosed subject matter may provide a light distribution control system adapted to be installed in a mobility, comprising:
an imaging device configured to acquire an image in which an area located at least ahead of the mobility is captured;
a lighting device configured to perform light distribution to a lighted area located at least ahead of the mobility;
an image processing device configured to specify, in the image, a target area in which a prescribed target is captured, and to output luminance information corresponding to luminance of the target area and caution level information corresponding to a caution level of the target; and
a light distribution processing device configured to cause the lighting device to change the light distribution based on the luminance information and the caution level information,
wherein the light distribution processing device is configured to cause the lighting device to gradually decrease illuminance of at least an area corresponding to the target area in the lighted area, in a case where the caution level is no less than a threshold value and the luminance is no less than a threshold value.

A fourth illustrative aspect of the presently disclosed subject matter may provide a light distribution control method adapted to be executed in a mobility, comprising:
causing an imaging device to acquire an image in which an area located at least ahead of the mobility is captured;
specifying, in the image, a target area in which a prescribed target is captured;
acquiring luminance of the target area and a caution level of the target; and
controlling light distribution to a lighted area located at least ahead of the mobility that is performed by a lighting device so as to gradually decrease illuminance of at least an area corresponding to the target area in the lighted area, in a case where the caution level is no less than a threshold value and the luminance is no less than a threshold value.

The fact that the caution level of the target specified ahead of the mobility is no less than the threshold value means that urgency in causing the mobility to perform a response operation in view of the presence of the target is relatively high. However, the fact that the luminance of the target area including the target is no less than the threshold value means that an area where the target situates is lighted with excessive illuminance. By deliberately performing gradual decrease of the illuminance of the area in such a situation, not only it is possible to suppress occurrence of a situation that the target cannot be maintained in the specified state with a rapid decrease in illuminance, but also it is possible to suppress distraction of the driver of the mobility that may be caused by the change in the light distribution. In addition, not only power consumption in the lighting device can be reduced, but also it is possible to suppress glare that may be caused to the target. As a result, it is possible to realize change in the light distribution so as to assist with recognition of the peripheral environment performed by the imaging device installed in the mobility while suppressing the distraction of the driver of the mobility caused by the change.

### Brief Description of Drawings

FIG. 1 illustrates a vehicle in which a light distribution control system according to one exemplary embodiment is to be installed.
FIG. 2 illustrates a functional configuration of the light distribution control system of FIG. 1.
FIG. 3 illustrates a spatial light modulator included in a lighting device of FIG. 2.
FIG. 4 illustrates a light distribution pattern formed by the lighting device of FIG. 2.
FIG. 5 illustrates an image acquired by an imaging device of FIG. 2.
FIG. 6 illustrates processing to be executed by an image processing device of FIG. 2.
FIG. 7 illustrates a processing flow to be executed by the light distribution control system of FIG. 2.
FIG. 8 illustrates an exemplary operation realized by the processing of FIG. 7.
FIG. 9 illustrates another exemplary operation realized by the processing of FIG. 7.
FIG. 10 illustrates another exemplary operation realized by the processing of FIG. 7.
FIG. 11 illustrates another exemplary operation realized by the processing of FIG. 7.
FIG. 12 illustrates another exemplary operation realized by the processing of FIG. 7.
FIG. 13 illustrates another exemplary operation realized by the processing of FIG. 7.
FIG. 14 illustrates another exemplary operation realized by the processing of FIG. 7.
FIG. 15 illustrates another exemplary operation realized by the processing of FIG. 7.

### Description of Embodiments

Exemplary embodiments will be described below in detail with reference to the accompanying drawings. In the drawings used in the following descriptions, the scale thereof is changed as required in order to make each element to a recognizable size.

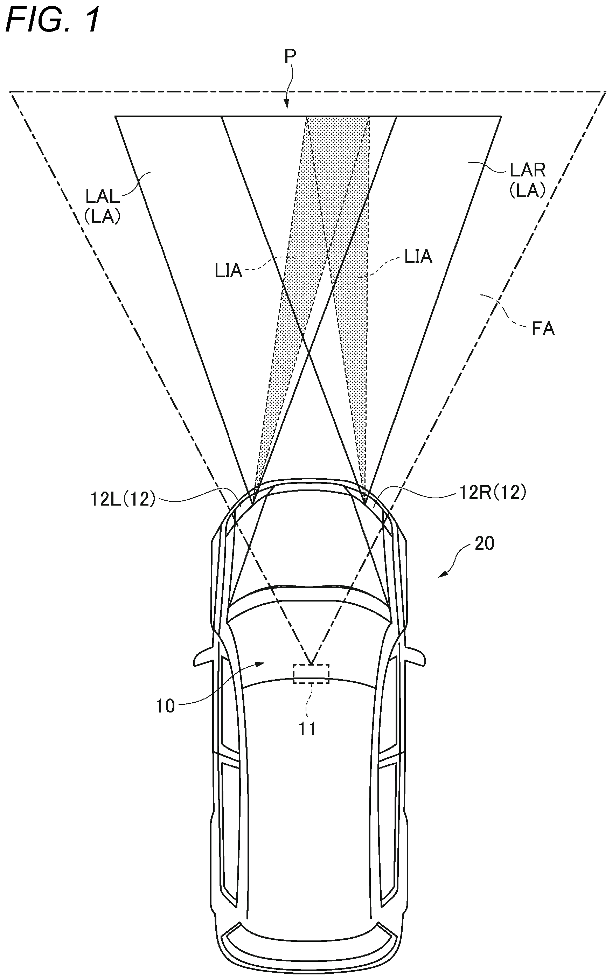

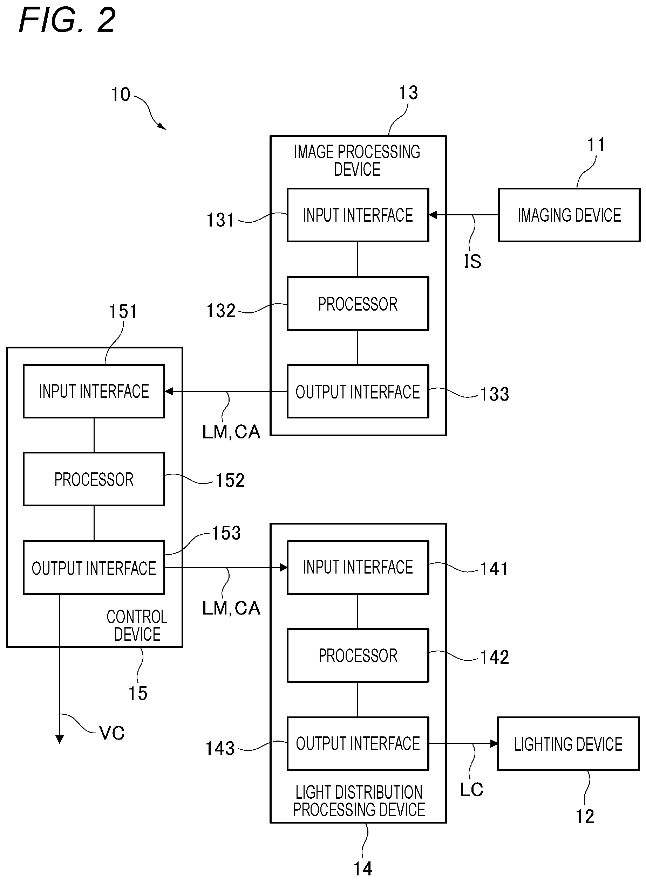

FIG. 1 illustrates an appearance of a vehicle 20 in which a light distribution control system 10 according to an exemplary embodiment is installed. The vehicle 20 is an exemplary mobility. FIG. 2 illustrates a functional configuration of the light distribution control system 10.

The light distribution control system 10 includes an imaging device 11. The imaging device 11 is disposed, for example, in an upper portion of a windshield of the vehicle 20. The imaging device 11 is configured to acquire an image in which an area FA located at least ahead of the vehicle 20 is captured, and to output an image signal IS corresponding to the image. The shape of the area FA illustrated in FIG. 1 is merely by way of example. The image signal IS may be an analog signal or a digital signal according to the specification of the imaging device 11.

The light distribution control system 10 includes a left lighting device 12L and a right lighting device 12R. The left lighting device 12L is installed in a left front portion of the vehicle 20. The left lighting device 12L is installed so as to distribute light to a left lighted area LAL located at least ahead of the vehicle 20. The right lighting device 12R is installed in a right front portion of the vehicle 20. The right lighting device 12R is installed so as to distribute light to a right lighted area LAR located at least ahead of the vehicle 20. The shapes of the left lighted area LAL and the right lighted area LAR illustrated in FIG. 1 are merely by way of example.

In the following descriptions, the left lighting device 12L and the right lighting device 12R are collectively referred to as "a lighting device 12" as necessary. Similarly, the left lighted area LAL and the right lighted area LAR are collectively referred to as "a lighted area LA" as necessary. The lighting device 12 includes at least a headlamp. As long as light can be distributed to a prescribed lighted area LA, the lighting device 12 may include a clearance lamp, a fog lamp, and the like in addition to the headlamp.

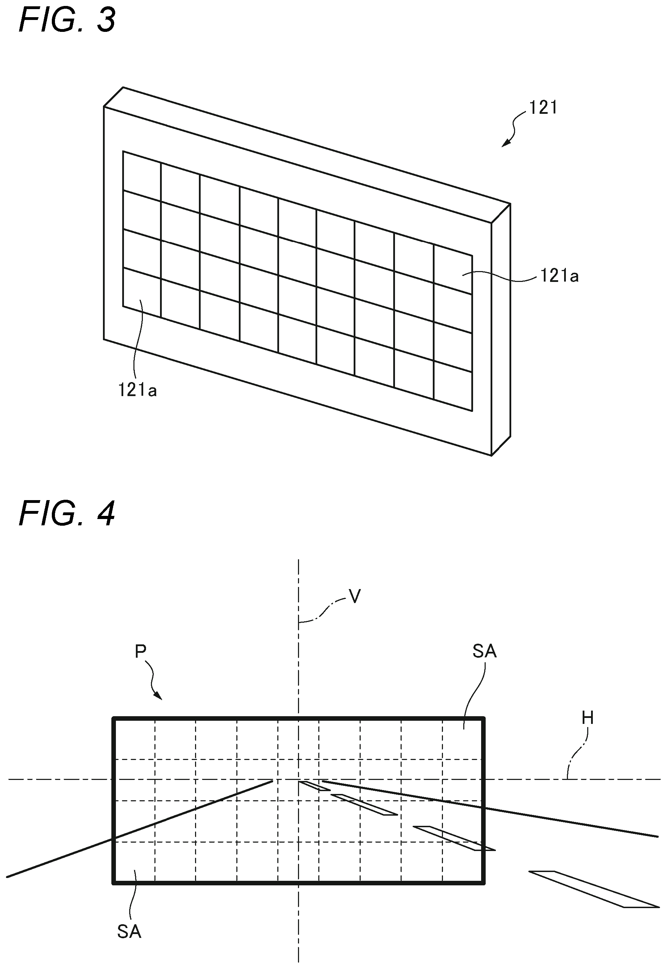

FIG. 3 illustrates a spatial light modulator 121 as an exemplary light source used in the lighting device 12. The spatial light modulator 121 includes multiple light sources 121a. The multiple light sources 121a are arrayed in a matrix. Each light source 121a is implemented by a semiconductor light emitting element. Luminous intensity of light emitted from each light source 121a can be controlled independently of the other light sources 121a.

FIG. 4 illustrates a light distribution pattern P formed by the spatial light modulator 121 in an area ahead of the vehicle 20. A symbol H represents a horizontal reference line in a light distribution optical system. A symbol V represents a vertical reference line in the light distribution optical system. The horizontal reference line and the vertical reference line are orthogonal. An intersection of the horizontal reference line and the vertical reference line corresponds to an optical axis in the light distribution optical system.

The light distribution pattern P includes multiple sub-areas SA. Each sub-area SA is associated with one of the light sources 121a included in the spatial light modulator 121. The shape of the light distribution pattern P illustrated in FIG. 4 corresponds to a state in which all the light sources 121a are activated.

As illustrated in FIG. 2, the light distribution control system 10 includes an image processing device 13. The image processing device 13 may be provided as a part of the imaging device 11 or may be disposed at an appropriate position in the vehicle 20 independently of the imaging device 11. The image processing device 13 is configured to perform specific image processing with respect to the image acquired by the imaging device 11.

The image processing device 13 includes an input interface 131. The input interface 131 is configured as a hardware interface that receives the image signal IS outputted from the imaging device 11. In a case where the image signal IS is an analog signal, the input interface 131 is provided with an appropriate conversion circuit including an A/D converter.

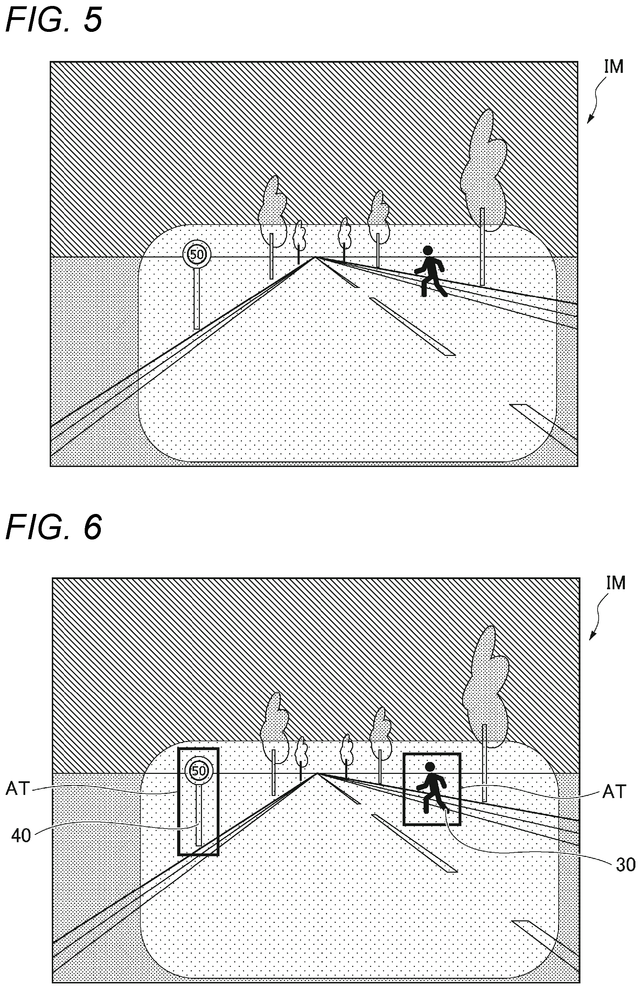

The image processing device 13 includes a processor 132. Details of the image processing performed by the processor 132 will be described with reference to FIGS. 5 and 6. FIG. 5 illustrates an image IM acquired by the imaging device 11. An area located at least ahead of the vehicle 20 is captured in the image IM.

The processor 132 is configured to specify a target area AT in which a prescribed target is captured in the image IM based on the image signal IS corresponding to the image IM. Examples of the prescribed target include a vehicle, a person, an animal, a traffic marker, and the like. In FIG. 6, a target area AT in which a person 30 is captured in the image IM and a target area AT in which a traffic marker 40 is captured are specified.

The processor 132 is configured to acquire luminance information LM corresponding to luminance of the specified target area AT as well as caution level information CA corresponding to a caution level of a target included in the target area AT.

As used herein, the term "a caution level of a target" means an index indicative of a degree of necessity for drawing attention of the driver of the vehicle 20 to the target. In the example illustrated in FIG. 6, a caution level of the person 30 is higher than a caution level of the traffic marker 40. On the other hand, a caution level of a person about to enter a roadway is higher than a caution level of a person walking on a sidewalk. That is, the caution level is determined based on a type of the target, a position of the target, speed of the target, possibility of colliding with the target when the vehicle 20 continues the current traveling, a time-to-collision with the target when the vehicle 20 continues the current traveling, and the like. The caution level may be specified by a rule-based method or may be inferred by an inference model created through deep learning.

As illustrated in FIG. 2, the image processing device 13 includes an output interface 133 configured as a hardware interface. The processor 132 is configured to output the luminance information LM and the caution level information CA from the output interface 133 in association with information as for the position of the target area AT.

The light distribution control system 10 includes a light distribution processing device 14. The light distribution processing device 14 is configured to cause the lighting device 12 to change the light distribution to the lighted area LA based on the luminance information LM and the caution level information CA. The light distribution processing device 14 may be provided as a part of the lighting device 12 or may be disposed at an appropriate position in the vehicle 20 independently of the lighting device 12.

The light distribution control system 10 includes a control device 15. The control device 15 is a versatile device that is disposed at an appropriate position in the vehicle 20 and is at least partly responsible for various kinds of processing to be executed in the vehicle 20.

The control device 15 includes an input interface 151. The input interface 151 is connected to the output interface 133 of the image processing device 13 via a communication network installed in the vehicle 20. The input interface 151 is configured as a hardware interface that receives the luminance information LM and the caution level information CA outputted from the output interface 133.

The control device 15 includes a processor 152 and an output interface 153. The processor 152 is configured to output, from the output interface 153, a vehicle control signal VC that causes the vehicle 20 to perform an appropriate response operation in accordance with the target specified by the image processing device 13. Examples of the response operation include a notification to the driver, a warning to the target, a deceleration, a maneuver, and the like. The vehicle control signal VC is transmitted to an appropriate device installed in the vehicle 20 in accordance with the response operation to be executed.

The processing for causing the lighting device 12 to change the light distribution is also an exemplary response operation. In order to perform the processing, the processor 152 is configured to output, from the output interface 153, the luminance information LM and the caution level information CA received by the input interface 151.

The light distribution processing device 14 includes an input interface 141. The input interface 141 is connected to the output interface 153 of the control device 15 via a communication network installed in the vehicle 20. The input interface 141 is configured as a hardware interface that receives the luminance information LM and the caution level information CA outputted from the output interface 153.

The light distribution processing device 14 includes a processor 142 and an output interface 143. The processor 142 is configured to execute processing described later based on the luminance information LM and the caution level information CA received by the input interface 141, and output, from the output interface 143, a light distribution control signal LC for controlling the light distribution operation to be performed by the lighting device 12. The light distribution control signal LC may be an analog signal or a digital signal according to the specification of the lighting device 12. In a case where the light distribution control signal LC is an analog signal, the output interface 143 is provided with an appropriate conversion circuit including a D/A converter.

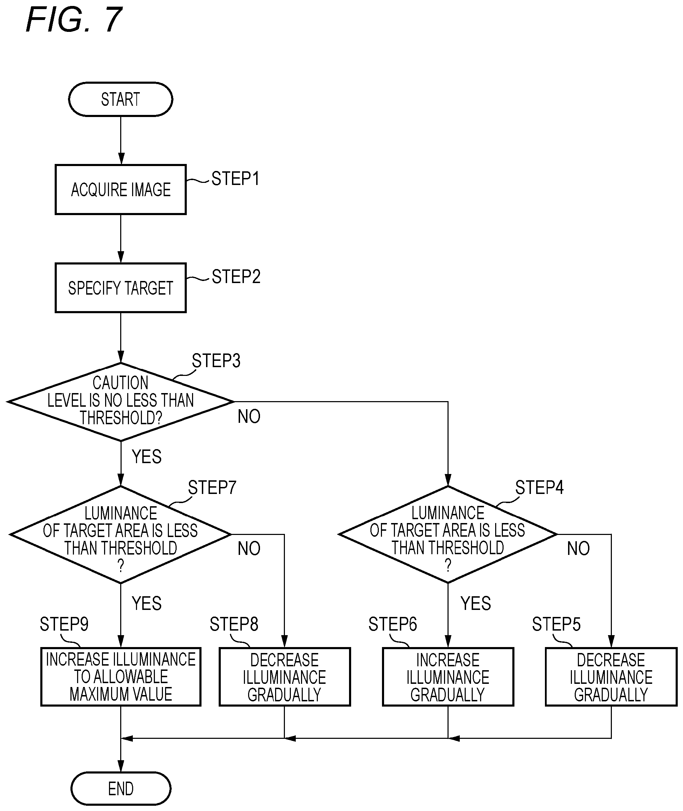

FIG. 7 illustrates a flow of processing to be performed in the light distribution control system configured as described above.

First, as described with reference to FIG. 5, the imaging device 11 acquires an image IM in which an area FA located at least ahead of the vehicle 20 is captured (STEP1).

Subsequently, as described with reference to FIG. 6, the image processing device 13 specifies a target area AT including a prescribed target captured in the image IM (STEP2). The image processing device 13 outputs caution level information CA corresponding to a caution level of the target, as well as luminance information LM corresponding to luminance of the target area AT in association with a position of the target area AT.

The caution level information CA and the luminance information LM outputted by the image processing device 13 are received by the light distribution processing device 14 by way of the control device 15. The processor 142 of the light distribution processing device 14 determines whether the caution level corresponding to the caution level information CA is no less than a threshold value (STEP3).

In a case where it is determined that the caution level is less than the threshold value (NO in STEP3), the processor 142 determines whether the luminance of the target area AT corresponding to the luminance information LM is less than a threshold value (STEP4).

In a case where it is determined that the luminance is no less than the threshold value (NO in STEP4), the processor 142 outputs, from the output interface 143, a light distribution control signal LC for causing the lighting device 12 to change the light distribution so that illuminance of an area corresponding to the target area AT in a lighted area LA is gradually decreased (STEP5).

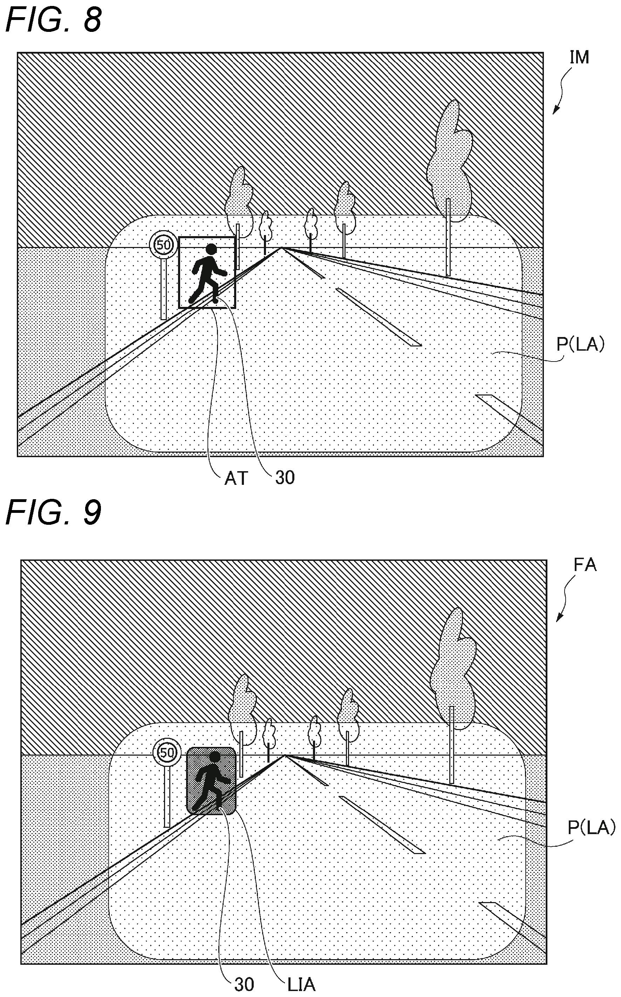

An exemplary situation in which this processing is to be performed will now be specifically described with reference to FIGS. 8 and 9. In an image IM acquired by the imaging device 11 illustrated in FIG. 8, a person 30 as the prescribed target is captured. Although the position of the person 30 is relatively distant from the vehicle 20, the person 30 is lighted with relatively high illuminance. Accordingly, the determination to be performed is that the caution level is less than the threshold value and the luminance is no less than the threshold value.

As illustrated in FIG. 9, the processor 142 causes the lighting device 12 to change a light distribution pattern P such that illuminance of a position corresponding to the target area AT in the lighted area LA is decreased.

Specifically, the processor 142 stores in advance information as for correspondence between the position in the image IM and the position in the lighted area LA. Since the caution level information CA and the luminance information LM provided from the image processing device 13 are associated with the position of the target area AT specified in the image IM, the position in the lighted area LA corresponding to the position of the target area AT can be specified. The processor 142 gradually decreases the luminous intensity of the light emitted from the at least one light source 121a in the spatial light modulator 121 that is associated with the position of the lighted area LA.

By performing the above processing with respect to the spatial light modulator 121 of the left lighting device 12L and the spatial light modulator 121 of the right lighting device 12R, an area LIA with relatively low illuminance is formed in each of the left lighted area LAL and the right lighted area LAR as illustrated in FIG. 1. As a result, as illustrated in FIG. 9, the area LIA with relatively low illuminance is formed in the light distribution pattern P.

The processor 142 controls the operation of the lighting device 12 so as to gradually change the illuminance of the position corresponding to the target area AT in the lighted area LA. As used herein, the expression "gradually changing (decreasing/increasing) illuminance" means changing (decreasing/increasing) the illuminance of the target area at a gradual speed that cannot be recognized by the driver of the vehicle 20 with the normal attention.

In a case where it is determined that the caution level is less than the threshold value (NO in STEP3 of FIG. 7) and the luminance is less than the threshold value (YES in STEP4), the processor 142 outputs, from the output interface 143, a light distribution control signal LC for causing the lighting device 12 to change the light distribution so that illuminance of the area corresponding to the target area AT in the lighted area LA gradually increases (STEP6).

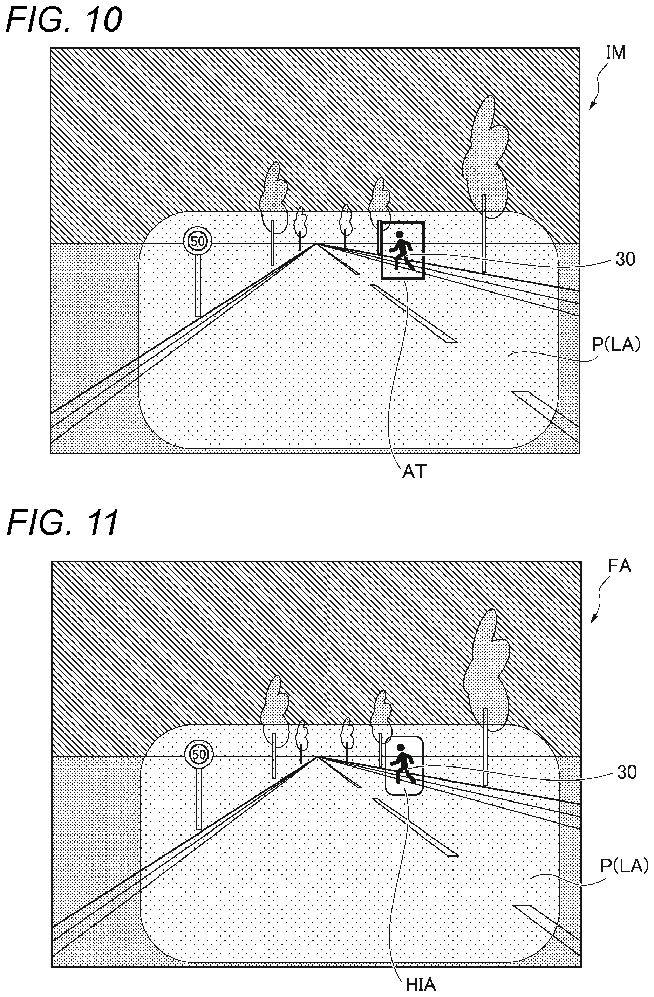

An exemplary situation in which this processing is to be performed will now be specifically described with reference to FIGS. 10 and 11. In an image IM acquired by the imaging device 11 illustrated in FIG. 10, a person 30 as the prescribed target is captured. The position of the person 30 is relatively distant from the vehicle 20, and the person 30 is lighted with relatively low illuminance. Accordingly, the determination to be performed is that the caution level is less than the threshold value and the luminance is less than the threshold value.

As illustrated in FIG. 11, the processor 142 causes the lighting device 12 to change a light distribution pattern P such that illuminance of a position corresponding to the target area AT in the lighted area LA is increased. Specifically, based on the correspondence between the position in the image IM and the position in the lighted area LA that is stored in advance, the processor 142 specifies a position in the lighted area LA corresponding to the position of the target area AT in the image IM associated with the caution level information CA and the brightness information LM provided from the image processing device 13, and gradually increases the luminous intensity of the light emitted from at least one light source 121a in the spatial light modulator 121 that is associated with the position of the lighted area LA. As a result, an area HIA with relatively high illuminance is formed in the light distribution pattern P.

The fact that the caution level of the target specified ahead of the vehicle 20 is less than the threshold value means that urgency in causing the vehicle 20 to perform a response operation in view of the presence of the target is relatively low. The fact that the luminance of the target area AT including the target is no less than the threshold value means that an area where the target situates is lighted with excessive illuminance. By gradually decreasing the illuminance of the area in such a situation, not only it is possible to suppress occurrence of a situation that the target cannot be maintained in the specified state with a rapid decrease in illuminance, but also it is possible to suppress distraction of the driver of the vehicle 20 that may be caused by the change in the light distribution. In addition, not only power consumption in the lighting device 12 can be reduced, but also it is possible to suppress glare that may be caused to the target.

On the other hand, the fact that the luminance of the target area AT including the target is less than the threshold value means that an area where the target situates is lighted with insufficient illuminance. By gradually increasing the illuminance of the area in such a situation, not only it is possible to assist with recognition of peripheral environment of the vehicle 20 through adjustment of illuminance appropriate for target recognition to be performed by the image processing device 13, but also it is possible to suppress distraction of the driver of the vehicle 20 that may be caused by the change in the light distribution.

As a result, it is possible to realize change in the light distribution so as to assist with recognition of the peripheral environment performed by the imaging device 11 installed in the vehicle 20 while suppressing the distraction of the driver of the vehicle 20 caused by the change.

In a case where it is determined that the caution level of the specified target corresponding to the caution level information CA received by the input interface 141 is no less than the threshold value (YES in STEP3 of FIG. 7), the processor 142 determines whether the luminance of the target area AT corresponding to the luminance information LM is less than the threshold value (STEP7).

In a case where it is determined that the luminance is no less than the threshold value (NO in STEP7), the processor 142 outputs, from the output interface 143, a light distribution control signal LC for causing the lighting device 12 to change the light distribution so that illuminance of an area corresponding to the target area AT in a lighted area LA is gradually decreased (STEP8).

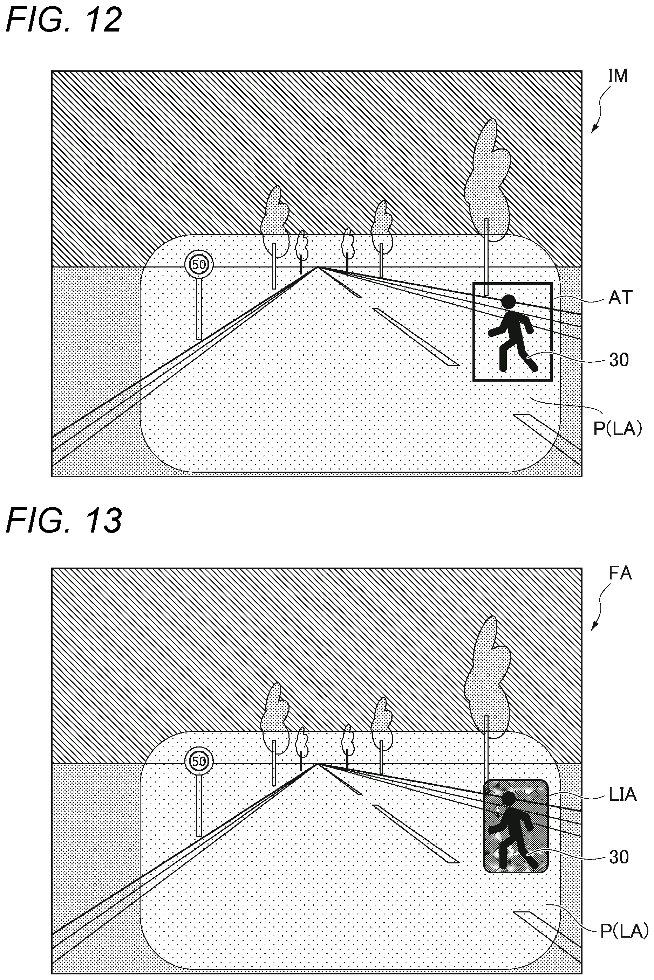

An exemplary situation in which this processing is to be performed will now be specifically described with reference to FIGS. 12 and 13. In an image IM acquired by the imaging device 11 illustrated in FIG. 12, a person 30 as the prescribed target is captured. The position of the person 30 is relatively close to the vehicle 20, and the person 30 is lighted with relatively high illuminance. Accordingly, the determination to be performed is that the caution level is no less than the threshold value and the luminance is no less than the threshold value.

As illustrated in FIG. 13, the processor 142 causes the lighting device 12 to change a light distribution pattern P such that illuminance of a position corresponding to the target area AT in the lighted area LA is decreased. Specifically, based on the correspondence between the position in the image IM and the position in the lighted area LA that is stored in advance, the processor 142 specifies a position in the lighted area LA corresponding to the position of the target area AT in the image IM associated with the caution level information CA and the brightness information LM provided from the image processing device 13, and gradually decreases the luminous intensity of the light emitted from at least one light source 121a in the spatial light modulator 121 that is associated with the position of the lighted area LA. As a result, an area LIA with relatively low illuminance is formed in the light distribution pattern P.

The fact that the caution level of the target specified ahead of the vehicle 20 is no less than the threshold value means that urgency in causing the vehicle 20 to perform a response operation in view of the presence of the target is relatively high. However, the fact that the luminance of the target area AT including the target is no less than the threshold value means that an area where the target situates is lighted with excessive illuminance. By deliberately performing gradual decrease of the illuminance of the area in such a situation, not only it is possible to suppress occurrence of a situation that the target cannot be maintained in the specified state with a rapid decrease in illuminance, but also it is possible to suppress distraction of the driver of the vehicle 20 that may be caused by the change in the light distribution. In addition, not only power consumption in the lighting device 12 can be reduced, but also it is possible to suppress glare that may be caused to the target. As a result, it is possible to realize change in the light distribution so as to assist with recognition of the peripheral environment performed by the imaging device 11 installed in the vehicle 20 while suppressing the distraction of the driver of the vehicle 20 caused by the change.

In a case where it is determined that the caution level is no less than the threshold value (YES in STEP3 of FIG. 7) and the luminance is less than the threshold value (YES in STEP7), the processor 142 outputs, from the output interface 143, a light distribution control signal LC for causing the lighting device 12 to change the light distribution so that illuminance of the area corresponding to the target area AT in the lighted area LA increases to an allowable maximum value (STEP9). The increase in the illuminance may be performed with at least one step.

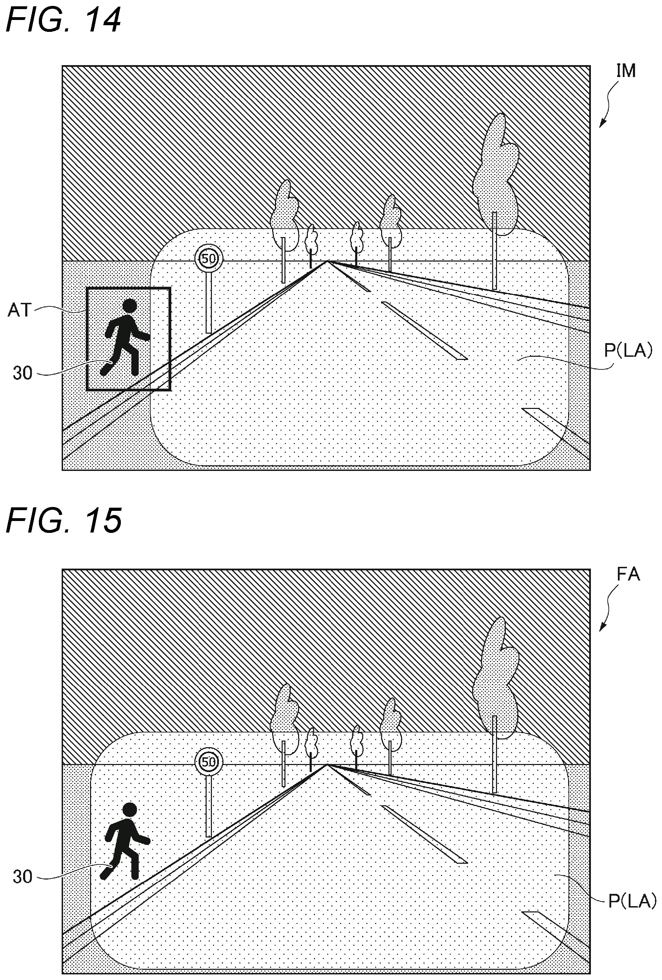

An exemplary situation in which this processing is to be performed will now be specifically described with reference to FIGS. 14 and 15. In an image IM acquired by the imaging device 11 illustrated in FIG. 14, a person 30 as the prescribed target is captured. The position of the person 30 is relatively close to the vehicle 20, and the person 30 is not lighted with the light distribution pattern P. Accordingly, the determination to be performed is that the caution level is no less than the threshold value and the luminance is less than the threshold value.

As illustrated in FIG. 15, the processor 142 causes the lighting device 12 to change a light distribution pattern P such that illuminance of a position corresponding to the target area AT in the lighted area LA is increased to the allowable maximum value. Specifically, based on the correspondence between the position in the image IM and the position in the lighted area LA that is stored in advance, the processor 142 specifies a position in the lighted area LA corresponding to the position of the target area AT in the image IM associated with the caution level information CA and the brightness information LM provided from the image processing device 13, and activates at least one light source 121a in the spatial light modulator 121 that is associated with the position of the lighted area LA so that the illuminance of the lighted area LA reaches the allowable maximum value.

By appropriately adjusting an optical system for distributing the light emitted from the spatial light modulator 121 toward the lighted area LA, the light distribution may be changed so that the light distribution pattern P is moved so as to light the person 30. Alternatively, the light distribution may be changed so that the person 30 is lighted by activating a lamp included in the lighting device 12 that is different from the lamp forming the light distribution pattern P.

The fact that the caution level of the target specified ahead of the vehicle 20 is no less than the threshold value means that urgency in causing the vehicle 20 to perform a response operation in view of the presence of the target is relatively high. In addition, the fact that the luminance of the target area AT including the target is less than the threshold value means that an area where the target situates is lighted with insufficient illuminance. Under such a situation, increasing capability of recognizing the target as soon as possible to draw the driver's attention to the target with the light distribution is prioritized than suppression of the distraction of the driver of the vehicle 20 caused by the change in the light distribution.

As illustrated in FIG. 1, since the light distribution pattern P is formed by overlapping the light emitted from the left lighting device 12L and the light emitted from the right lighting device 12R, illuminance in the lighted area varies in the left-right direction. In general, a central portion in the left-right direction of the light distribution pattern P has higher illuminance than end portions in the left-right direction of the light distribution pattern P. In addition, the illuminance of the light distribution pattern P decreases as the distance from the vehicle 20 increases. In the light distribution pattern P exemplified in FIGS. 5, 6, and 8 to 15, illustration of the variation of the illuminance is omitted.

In this exemplary embodiment, in a case where the light distribution is changed so that the illuminance of the part of the lighted area LA is increased or decreased, a target value of the illuminance is made constant. As a result, a variation amount of the illuminance caused by the processing for changing the light distribution is different in accordance with the position relative to the left-right direction in the lighted area LA and the distance from the vehicle 20 to the target that is to be subjected to the change of the light distribution. According to such a configuration, it is possible to suppress increase in load of processing for controlling the lighting device 12 that is performed by the light distribution processing device 14.

The processor 142 of the light distribution processing device 14 may determine a distance to a target of interest based on the information as for the position of the target area AT that is associated with the caution level information CA and the luminance information LM received by the input interface 141. In this case, the processor 142 may be configured to stop the processing for gradually decreasing the illuminance of the position corresponding to the target area AT in the lighted area LA in a case where it is determined that the distance is less than a threshold value.

The fact that the distance to the target of interest is less than the threshold value means that urgency in causing the vehicle 20 to perform a response operation in view of the presence of the target is increasing. According to the configuration as described above, it is possible to suppress occurrence of a situation that the target cannot be maintained in the specified state with a decrease in illuminance performed in such a condition.

Each of the processor 132 of the image processing device 13, the processor 142 of the light distribution processing device 14, and the processor 152 of the control device 15 having the various functions described above may be implemented by a versatile microprocessor operating in cooperation with a versatile memory. Examples of the versatile microprocessor include a CPU, an MPU, and a GPU. Examples of the versatile memory include a RAM and a ROM. In this case, the ROM may store a computer program for realizing the functions. The versatile microprocessor specifies at least a part of the computer program stored in the ROM, loads the program on the RAM, and executes the processing described above in cooperation with the RAM. The computer program may be pre-installed in the versatile memory or may be downloaded from an external server device via a communication network and then installed in the versatile memory.

Each of the processor 132 of the image processing device 13, the processor 142 of the light distribution processing device 14, and the processor 152 of the control device 15 having the various functions described above may be implemented by an exclusive integrated circuit capable of executing a computer program for realizing the functions. Examples of the exclusive integrated circuit include a microcontroller, an ASIC and an FPGA. In this case, the computer program is preinstalled in a memory element included in the exclusive integrated circuit.

Each of the processor 132 of the image processing device 13, the processor 142 of the light distribution processing device 14, and the processor 152 of the control device 15 may be implemented by a combination of the versatile microprocessor and the exclusive integrated circuit.

The foregoing description of various configurations is provided merely by way of illustration to facilitate understanding of the presently disclosed subject matter. Each of the exemplary configurations may be modified or combined with the others without departing from the scope of the presently disclosed subject matter.

The processor 142 of the light distribution processing device 14 may be configured to execute only the case where it is determined that the caution level is no less than the threshold value (YES in STEP3) in the processing flow illustrated in FIG. 7.

Alternatively, the processor 142 of the light distribution processing device 14 may be configured to execute only the case where it is determined that the caution level is less than a threshold value (NO in STEP3) in the processing flow illustrated in FIG. 7. In such a case, in the case where it is determined that the luminance of the target area AT is less than the threshold value (YES in STEP4), the processing for gradually increasing the illuminance (STEP6) can be replaced with processing for increasing the illuminance to the allowable maximum value with at least one step (STEP8).

The spatial light modulator 121 included in the lighting device 12 can be replaced with a scanning device including a light deflector for deflecting light emitted from a light source. The optical deflector may be configured using a movable mirror such as a MEMS (Micro Electro Mechanical Systems) mirror or a galvanomirror. By appropriately adjusting intensity of the light emitted from the light source and a deflecting direction of the movable mirror, it is possible to change illuminance of a desired position in the lighted area LA.

The shape of the vehicle 20 illustrated in FIG. 1 is merely by way of example. The shape and the number of wheels of the vehicle 20 in which the light distribution control system 10 is installed can be appropriately determined.

The mobility in which the light distribution control system 10 is installed is not limited to the vehicle 20. Examples of other mobilities include road railways and the like.

The present application is based on Japanese Patent Application No. 2023-181189 filed on October 20, 2023, the entire contents of which are incorporated herein by reference.

## Claims

1. A light distribution control system adapted to be installed in a mobility, comprising:
an imaging device configured to acquire an image in which an area located at least ahead of the mobility is captured;
a lighting device configured to perform light distribution to a lighted area located at least ahead of the mobility;
an image processing device configured to specify, in the image, a target area in which a prescribed target is captured, and to output luminance information corresponding to luminance of the target area and caution level information corresponding to a caution level of the target; and
a light distribution processing device configured to cause the lighting device to change the light distribution based on the luminance information and the caution level information,
wherein the light distribution processing device is configured to cause the lighting device to gradually vary illuminance of at least an area corresponding to the target area in the lighted area in accordance with the luminance, in a case where the caution level is less than a threshold value.

2. A light distribution control system adapted to be installed in a mobility, comprising:
an imaging device configured to acquire an image in which an area located at least ahead of the mobility is captured;
a lighting device configured to perform light distribution to a lighted area located at least ahead of the mobility;
an image processing device configured to specify, in the image, a target area in which a prescribed target is captured, and to output luminance information corresponding to luminance of the target area and caution level information corresponding to a caution level of the target; and
a light distribution processing device configured to cause the lighting device to change the light distribution based on the luminance information and the caution level information,
wherein the light distribution processing device is configured to cause the lighting device to gradually decrease illuminance of at least an area corresponding to the target area in the lighted area, in a case where the caution level is no less than a threshold value and the luminance is no less than a threshold value.

3. The light distribution control system according to claim 1 or 2,
wherein the light distribution processing device is configured to cause the lighting device to increase illuminance of at least an area corresponding to the target area in the lighted area to an allowable maximum value with at least one step, in a case where the caution level is no less than the threshold value and the luminance is less than the threshold value.

4. The light distribution control system according to claim 1 or 2,
wherein a variation amount of the illuminance is different in accordance with a position relative to a left-right direction in the lighted area.

5. The light distribution control system according to claim 1 or 2,
wherein a variation amount of the illuminance is different in accordance with a distance to the target.

6. The light distribution control system according to claim 1 or 2,
wherein the light distribution processing device is configured to stop decreasing the illuminance in a case where a distance to the target is less than a threshold value.

7. A light distribution control method adapted to be executed in a mobility, comprising:
causing an imaging device to acquire an image in which an area located at least ahead of the mobility is captured;
specifying, in the image, a target area in which a prescribed target is captured;
acquiring luminance of the target area and a caution level of the target; and
controlling light distribution to a lighted area located at least ahead of the mobility that is performed by a lighting device so as to gradually vary illuminance of at least an area corresponding to the target area in the lighted area in accordance with the luminance, in a case where the caution level is less than a threshold value.

8. A light distribution control method adapted to be executed in a mobility, comprising:
causing an imaging device to acquire an image in which an area located at least ahead of the mobility is captured;
specifying, in the image, a target area in which a prescribed target is captured;
acquiring luminance of the target area and a caution level of the target; and
controlling light distribution to a lighted area located at least ahead of the mobility that is performed by a lighting device so as to gradually decrease illuminance of at least an area corresponding to the target area in the lighted area, in a case where the caution level is no less than a threshold value and the luminance is no less than a threshold value.
